# EUROPEAN PATENT APPLICATION

(11) **EP 4 686 730 A1**
(43) Date of publication of application: **04.02.2026**
(21) Application number: 25193049.1
(22) Date of filing: 31.07.2025
(51) Int. Cl.: C08J 7/04, C08J 7/048

(54) **STRESS RELAXATION GAS BARRIER FILM**

(30) Priority: 01.08.2024 JP 2024126437
(71) Applicant: SHIN-ETSU CHEMICAL CO., LTD., Tokyo 1000005 (JP)
(72) Inventor: Kaneko, Tatsuro, Annaka-shi, Gunma (JP)
(74) Representative: Schicker, Silvia

(57) **Abstract**

A stress relaxation gas barrier film, including one or more cured film layers and one or more stress relaxation layers alternately stacked,
the one or more cured film layers being a cured product of a polysilazane composition containing a polysilazane compound represented by the following formula (1): 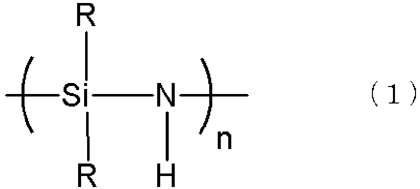 the one or more stress relaxation layers being a cured product of a silicone resin composition containing a linear organopolysiloxane represented by the following formula (A-1), and each having a film thickness of 0.1 to 15.0 µm:

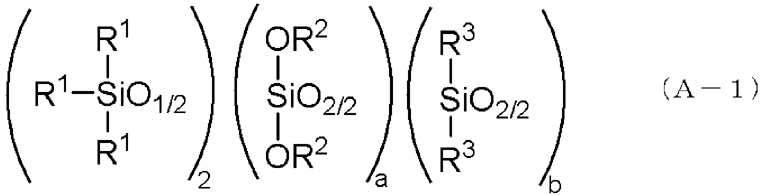

This can provide a gas barrier film with stress relaxation properties such that uniform application to a film or polysilazane resin is possible and workability does not deteriorate.

## Description

### TECHNICAL FIELD

The present invention relates to a gas barrier film having stress relaxation properties.

### BACKGROUND ART

Advanced electronic materials for devices represented by organic ELs, all-solid-state batteries, and perovskite solar cells are very sensitive to moisture, and therefore high-level water vapor barrier treatment is required to secure the durability of the devices. Specifically, a high gas barrier performance is necessary that is a water vapor transmission rate of around 10⁻³ to 10⁻⁶ (g/m²/day) at room temperature. In order to achieve this high barrier performance, various techniques such as sealing by sandwiching between glass plates and sealing with metal foil have been proposed. Unfortunately, the techniques have not led to any complete solution from the viewpoints of flexibility, translucency, and cost.

Meanwhile, a method involving lamination with an organic film subjected to high gas barrier treatment instead of glass or metal foil has been also proposed (Patent Document 1). This technique involves beforehand forming an inorganic film of, for example, SiO₂ or Si₃N₄ on a light-transparent or flexible film of, for example, polyethylene terephthalate (PET) by CVD. Since such lamination enables securing light transparency or flexibility as compared with direct sealing with inorganic glass or metal, the lamination is preferable in terms of characteristics. Unfortunately, the lamination is disadvantageous in that the lamination is very costly, and the laminate is vulnerable to strong bending. The use of polysilazane has therefore been proposed instead of CVD film formation (Patent Document 2).

Since polysilazane is a polymer that can be dissolved in solvent before curing, and forms an inorganic film of SiO₂ or SiOₓN_{y} after the curing, polysilazane can be applied by wet coating. Since the wet coating is more satisfactory in production cost and the yield than CVD or others, it is preferable that inorganic films be formed from polysilazane.

Unfortunately, the inorganic films are likely to crack due to volume shrinkage during curing. Even though the inorganic films are not folded, polysilazane cannot be applied at a film thickness of around 1 µm or more. Although techniques have also been performed involving stacking thin films having a thickness of around several hundred nanometers, the techniques have almost no effect of preventing cracking. It is conceivable that this results from the addition of stress due to the curing of inorganic polysilazane of upper layers to residual stress generated upon curing of inorganic polysilazane of lower layers. In order to solve this problem, proposed has been a technique involving applying polysilazane to both sides of a film (Patent Document 3). Since inorganic polysilazane cannot be applied to one side thereof over a limit of film thickness, inorganic polysilazane can be applied to both sides to increase the total thickness of the barrier layers around twofold. Unfortunately, even this technique does not enable the gas barrier performance to reach the required value.

Accordingly, a technique has been reported involving inserting a stress relaxation layer that relaxes residual stress upon stacking of inorganic polysilazane (Patent Document 4). This technique enables significantly increased total film thickness of the inorganic polysilazane layer, thereby improving the gas barrier performance; however, the material of the stress relaxation layer has not been optimized yet, and accordingly existing material is merely used. The technique is disadvantageous especially in that although, as a technique for curing the stress relaxation layer, the stress relaxation layers is crosslinked by UV irradiation, the curing reaction progresses gradually after the UV irradiation in the UV crosslinking, so that the surface state and the crosslinking state of the coating film over time are nonuniform. It is therefore difficult to determine the timing for applying inorganic polysilazane subsequently. Although the application of the inorganic polysilazane is comparatively easy after the full curing, the polysilazane needs to be left to stand for around one day after the UV irradiation, and this technique cannot therefore be applied to the mass production process.

### CITATION LIST

### PATENT LITERATURE

Patent Document 1: JP 2016-87815 A
Patent Document 2: JP 2018-177859 A
Patent Document 3: JP 2011-161891 A
Patent Document 4: JP 2023-088514 A

### SUMMARY OF INVENTION

### TECHNICAL PROBLEM

In conventional techniques, problems of a gas barrier film having a stress relaxation layer have been that the stress relaxation layer cannot be uniformly applied, and that the curing reaction of the stress relaxation layers is time-consuming, and hence the gas barrier films cannot be mass-produced.

The present invention has been completed to solve the above-mentioned problem, and is directed to providing a gas barrier film with stress relaxation properties such that uniform application to a film or polysilazane resin is possible and workability does not deteriorate.

### SOLUTION TO PROBLEM

In order to solve the above-mentioned problem, the present invention provides:
a stress relaxation gas barrier film, comprising one or more cured film layers and one or more stress relaxation layers alternately stacked,
the one or more cured film layers being a cured product of a polysilazane composition comprising a polysilazane compound represented by the following formula (1): 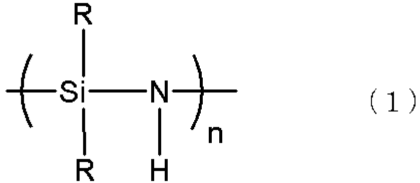
wherein R are each independently a hydrogen atom or a group selected from an alkyl group having 1 to 6 carbon atoms, an aryl group having 6 to 12 carbon atoms, an aralkyl group having 7 to 12 carbon atoms, and an alkoxy group having 1 to 6 carbon atoms, and "n" is an integer of 2 to 20,000,
the one or more stress relaxation layers being a cured product of a silicone resin composition comprising a linear organopolysiloxane represented by the following formula (A-1), and each having a film thickness of 0.1 to 15.0 µm: 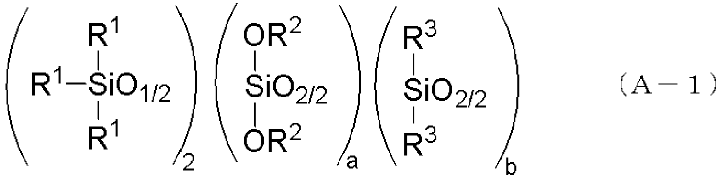
wherein R¹ are each independently an alkyl group having 1 to 3 carbon atoms or an alkenyl group having 2 to 3 carbon atoms, R² are each independently a hydrogen atom or an alkyl group having 1 to 3 carbon atoms, R³ are each independently a group selected from an alkyl group having 1 to 6 carbon atoms, an aryl group having 6 to 12 carbon atoms, and an aralkyl group having 7 to 12 carbon atoms, "a" is an integer satisfying 1 ≤ a < 200, and "b" is an integer satisfying 0 ≤ b < 200, provided that a + b satisfies 10 ≤ a + b < 200.

With such a stress relaxation gas barrier film, uniform application to a film or polysilazane resin is possible. The use of the stress relaxation layers enables performing only a solvent drying step to stabilize the film quality, progressing to the subsequent step, so that the mass productivity and the stability of the film quality can be greatly improved as compared with those in the past.

It is preferable that the silicone resin composition further comprises an organohydrogenpolysiloxane represented by the following formula (A-2): 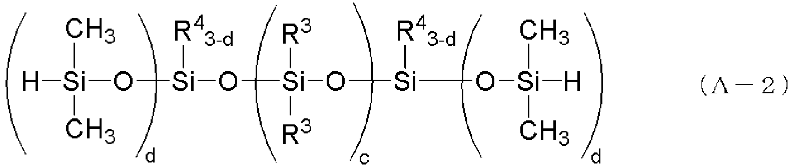 wherein R³ are the same as defined above, R⁴ are each independently an alkyl group having 1 to 4 carbon atoms or a phenyl group, "c" is an integer satisfying 0 ≤ c < 30, and "d" are each independently 2 or 3, and (B) a hydrosilylation catalyst.

The silicone resin composition, which contains such a organohydrogenpolysiloxane represented by formula (A-2) and (B) the hydrosilylation catalyst, cures, so that the stress relaxation layers are less likely to be redissolved upon the application of the composition for forming the cured film layers in the subsequent step, which is therefore preferable.

It is preferable that the silicone resin composition further comprises a linear organopolysiloxane represented by the following formula (A-3) : 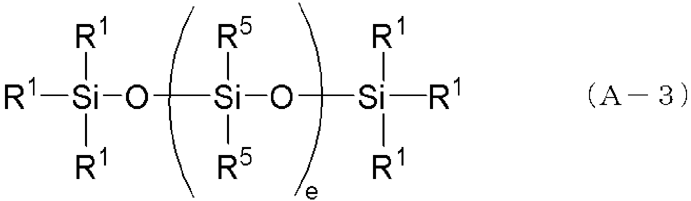 wherein R¹ are each independently as defined above, R⁵ are each independently a group selected from an alkyl group having 1 to 6 carbon atoms, an alkenyl group having 2 to 3 carbon atoms, an aryl group having 6 to 12 carbon atoms, and an aralkyl group having 7 to 12 carbon atoms provided that two or more groups in one molecule are alkenyl groups, and "e" is an integer satisfying 200 ≤ e < 500.

If the silicone resin composition contains such a linear organopolysiloxane represented by formula (A-3), the adjustment of the value of "e" enables regulating physical properties as stress relaxation layers such as the wet-spreading properties on a substrate and the flexibility after the curing.

It is preferable that, in the formula (1), all R be hydrogen atoms.

Since such a polysilazane composition enables forming a dense silica glass layer after the curing, the dense silica glass layer has high gas barrier properties, which is preferable.

It is preferable that the polysilazane composition further comprises a surfactant.

If the surfactant is added to the polysilazane composition, the wettability can be improved.

It is preferable that the silicone resin composition further comprises (C) a surfactant.

Since such a silicone resin composition improves in wettability on the substrate and the cured product layers of the polysilazane composition to reduce defects such as pinholes, which is therefore preferable.

It is preferable that the silicone resin composition further comprises (D) an adhesive auxiliary.

Since such a silicone resin composition has satisfactory adhesiveness to a substrate or the cured product layers of the polysilazane composition, the silicone resin composition is preferable.

### ADVANTAGEOUS EFFECTS OF INVENTION

As mentioned above, a stress relaxation gas barrier film of the present invention enables providing a uniform gas barrier film having excellent stress relaxation properties and satisfactory gas barrier properties. Since the compositions are also excellent in coatability and workability in the manufacturing of the gas barrier film of the present invention, the gas barrier film can be provided having stable quality.

### DESCRIPTION OF EMBODIMENTS

As described above, the development of a gas barrier film has been desired having excellent stress relaxation properties and stable film quality.

The present inventors have earnestly examined the above-mentioned problem repeatedly, and consequently found that a gas barrier film formed on a substrate, formed by alternately stacking one or more cured film layers on the surface side and one or more stress relaxation layers on the substrate side, is excellent in stress relaxation properties and also high in the stability of the film quality. As a result, the present inventors have completed the present invention.

The stress relaxation gas barrier film of the present invention alternately includes the one or more, preferably four to eight, cured film layers and the one or more, preferably four to eight, stress relaxation layers, the cured film layers comprising a specific material, the stress relaxation layers comprising a specific material. The cured film layers and the stress relaxation layers are alternately stacked to form a gas barrier film having higher adhesion between the layers.

That is, the present invention is
a stress relaxation gas barrier film, comprising one or more cured film layers and one or more stress relaxation layers alternately stacked,
the one or more cured film layers being a cured product of a polysilazane composition comprising a polysilazane compound represented by the following formula (1): 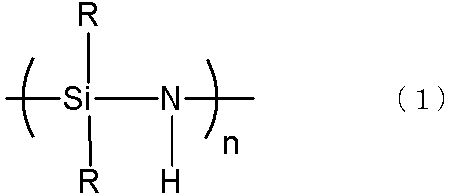
wherein R are each independently a hydrogen atom or a group selected from an alkyl group having 1 to 6 carbon atoms, an aryl group having 6 to 12 carbon atoms, an aralkyl group having 7 to 12 carbon atoms, and an alkoxy group having 1 to 6 carbon atoms, and "n" is an integer of 2 to 20,000,
the one or more stress relaxation layers being a cured product of a silicone resin composition comprising a linear organopolysiloxane represented by the following formula (A-1), and each having a film thickness of 0.1 to 15.0 µm: 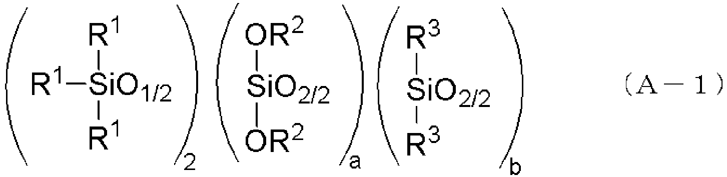
wherein R¹ are each independently an alkyl group having 1 to 3 carbon atoms or an alkenyl group having 2 to 3 carbon atoms, R² are each independently a hydrogen atom or an alkyl group having 1 to 3 carbon atoms, R³ are each independently a group selected from an alkyl group having 1 to 6 carbon atoms, an aryl group having 6 to 12 carbon atoms, and an aralkyl group having 7 to 12 carbon atoms, "a" is an integer satisfying 1 ≤ a < 200, and "b" is an integer satisfying 0 ≤ b < 200 provided that a + b satisfies 10 ≤ a + b < 200.

Although the present invention will be described in detail hereinafter, the present invention is not limited thereto.

### [Stress relaxation gas barrier film]

The stress relaxation gas barrier film of the present invention is a stress relaxation gas barrier film, comprising one or more cured film layers and one or more stress relaxation layers alternately stacked,
the one or more cured film layers being a cured product of a polysilazane composition comprising a polysilazane compound represented by the following formula (1): 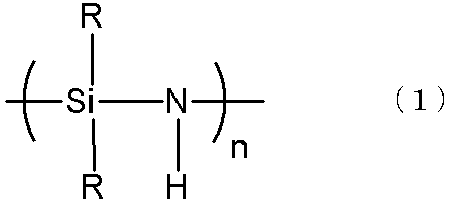
wherein R are each independently a hydrogen atom or a group selected from an alkyl group having 1 to 6 carbon atoms, an aryl group having 6 to 12 carbon atoms, an aralkyl group having 7 to 12 carbon atoms, and an alkoxy group having 1 to 6 carbon atoms, and "n" is an integer of 2 to 20,000,
the one or more stress relaxation layers being a cured product of a silicone resin composition comprising a linear organopolysiloxane represented by the following formula (A-1), and each having a film thickness of 0.1 to 15.0 µm: 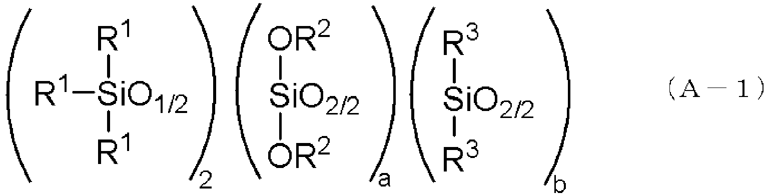
wherein R¹ are each independently an alkyl group having 1 to 3 carbon atoms or an alkenyl group having 2 to 3 carbon atoms, R² are each independently a hydrogen atom or an alkyl group having 1 to 3 carbon atoms, R³ are each independently a group selected from an alkyl group having 1 to 6 carbon atoms, an aryl group having 6 to 12 carbon atoms, and an aralkyl group having 7 to 12 carbon atoms, "a" is an integer satisfying 1 ≤ a < 200, and "b" is an integer satisfying 0 ≤ b < 200, provided that a + b satisfies 10 ≤ a + b < 200.

### [Cured film layer]

The cured film layers of the present invention are directed to imparting gas barrier performance to the stress relaxation gas barrier film. The polysilazane composition for forming the cured film layers contains a polysilazane compound represented by the following formula (1): 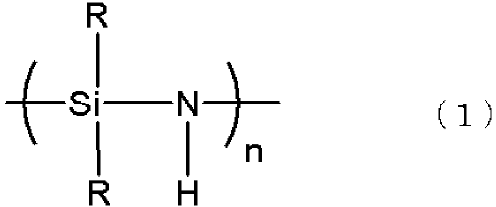 wherein R are each independently a hydrogen atom or a group selected from an alkyl group having 1 to 6 carbon atoms, an aryl group having 6 to 12 carbon atoms, an aralkyl group having 7 to 12 carbon atoms, and an alkoxy group having 1 to 6 carbon atoms, and "n" is an integer of 2 to 20,000.

In the formula (1), R are each independently a hydrogen atom or a group selected from an alkyl group having 1 to 6 carbon atoms, an aryl group having 6 to 12 carbon atoms, an aralkyl group having 7 to 12 carbon atoms, and an alkoxy group having 1 to 6 carbon atoms. Examples of the alkyl group include a methyl group, an ethyl group, a propyl group, a butyl group, a pentyl group, a hexyl group, and a cyclohexyl group. Examples of the aryl group include a phenyl group, a tolyl group, a xylyl group, and a naphthyl group. Examples of the aralkyl group include a benzyl group, a 2-phenylethyl group, and a 2-phenylpropyl group. Examples of the alkoxy group include a methoxy group, an ethoxy group, and a propoxy group. Among these, a hydrogen atom, a methyl group, and a phenyl group are preferable, and it is more preferable that all R be hydrogen atoms.

In the formula (1), "n" is an integer of 2 to 20,000, preferably 50 to 400.

Examples of a silazane unit of the polysilazane compound include the following:

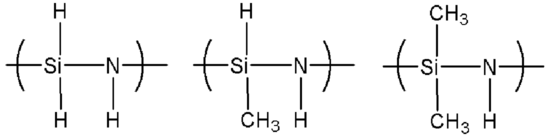

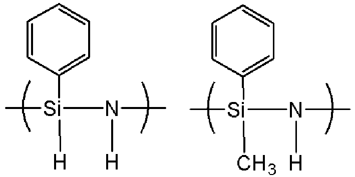

The polysilazane composition containing the polysilazane compound is applied to a substrate and cured to obtain the cured film layer. The polysilazane composition can contain an organic solvent.

Examples of the organic solvent include saturated chain-like aliphatic hydrocarbons such as n-hexane, n-octane, and n-nonane; unsaturated aliphatic hydrocarbons such as 1-octene, 1-nonene, and 1-decene; saturated cyclic aliphatic hydrocarbons such as cyclohexane, methylcyclohexane, and dimethylcyclohexane; ester compounds such as n-propyl acetate, isopropyl acetate, n-butyl acetate, isobutyl acetate, isoamyl acetate, and ethyl caproate; ether compounds such as diethyl ether, dibutyl ether, and ethylene glycol diethyl ether. Among them, ether compounds or ester compounds are preferable, and dibutyl ether or butyl acetate is particularly preferable from the viewpoints of the solubility of the polysilazane compound therein and the wettability on inorganic material or organic material. The mixing ratio of the polysilazane compound to the organic solvent is preferably in the range of 0.1/99.9 to 20/80, more preferably in the range of 1/99 to 20/80, further preferably in the range of 2.5/97.5 to 20/80 in terms of the mass ratio. If the mixing ratio is in this range, the storage stability, the coatability, and others are satisfactory, so that the polysilazane composition can be thickly applied at once, which is therefore preferable.

The surfactant may be added to the polysilazane composition to improve the wettability. Examples of the surfactant include acetylene glycol surfactants such as 2,4,7,9-tetramethyl-5-decyne-4,7-diol, 2,4,7,9-tetramethyl-5-decyne-4,7-dimethoxy, 2,4,7,9-tetramethyl-5-decyne-4,7-di(ethylene glycol), and 2,4,7,9-tetramethyl-5-decyne-4,7-di(ethylene glycol monomethyl ether). Although the amount of the surfactant added can be arbitrarily set depending on required wettability or defoaming properties, adding the surfactant to excess may affect the gas barrier characteristics adversely. The added amount is therefore preferably in the range of 0.01 to 5% by mass, more preferably in the range of 0.1 to 1% by mass based on the entirety of the polysilazane composition.

Examples of the method for applying the polysilazane composition to a substrate include roll coating using a chamber doctor coater, a one-roll kiss coater, a reverse kiss coater, a bar coater, a reverse roll coater, a forward rotation roll coater, a blade coater, and a knife coater; spin coating; dispensing; dipping; spraying; transferring; and slit coating.

The substrate may be any substrate and is not limited to, but the substrate is preferably a flexible resin substrate in view of practical application as a gas barrier. Specific preferable examples include general-purpose plastics such as polyethylene (PE), polypropylene (PP), polyvinyl chloride (PVC), polystyrene (PS), polyvinyl acetate (PVAc), polyurethane (PUR), polytetrafluoroethylene (PTFE), acrylonitrile-butadiene-styrene resin (ABS), and acrylic resin (PMMA) ; engineering plastics such as polyamide (PA), nylon, polycarbonate (PC), polyethylene terephthalate (PET), and polybutylene terephthalate (PBT); and super engineering plastics such as amorphous polyarylate (PAR), polysulfone (PSF), thermoplastic polyimide (PI), and polyether imide (PEI). Among them, PET or PC, which has been widely used industrially, is more preferable from the viewpoints of, for example, price, light transparency, and processability.

The coating film of the polysilazane composition applied by the above-mentioned method is preferably subjected to a drying step before curing treatment from the viewpoint of characteristics after curing. If volatile components such as the contained solvent are fully volatilized by the start of the curing treatment step, the drying step may however be omitted. In the case of heat curing treatment, the organic solvent is volatilized before the polysilazane compound in the composition is cured during the curing treatment step. Also in this case, the drying step may be omitted. On the contrary, if the curing treatment is performed with the organic solvent not fully dried, the organic solvent remains in the cured film, so that physical properties of the cured film may be deteriorated. Furthermore, the solvent is gasified during reheating, which may result in poor appearance such as voids or cracks.

As the method for curing the polysilazane coating film, mainly heating or energy line irradiation is common. The method does not, however, need to be limited thereto. In the case of the heat curing treatment, the curing reaction temperature of the polysilazane compound itself is very high, and the thermoplastic resin as the substrate cannot therefore resist the heat expectedly. Accordingly, it is preferable that a catalyst for thermal curing be beforehand added to the polysilazane composition. Without any catalyst, the curing time is around 1 day at 150°C. If the catalyst is added, the polysilazane composition is fully cured at 150°C for around 1 to 3 hours depending on the added amount. In the case of the energy line irradiation, a photo radical generator may be added beforehand. Even though any photo radical generator is not added, the curing proceeds fully. Since polysilazane absorbs light at a wavelength of 200 nm or less such as xenon excimer light almost fully, the polysilazane coating film can be cured in a short time.

As long as the polysilazane does not crack due to curing shrinkage during the curing of the polysilazane, the thickness of the coating film is, but not particularly limited to, preferably in the range of 0.01 to 20 µm. If the film thickness is 0.01 µm or more, the polysilazane can exhibit the effect of suppressing the deposition of oligomers, gas barrier properties, and solvent resistance fully, which is therefore preferable. If the film thickness is 20 µm or less, the film is high in flexibility, and is less likely to crack or be exfoliated after application to a flexible substrate such as a thermoplastic resin film, which is therefore preferable.

### [Stress relaxation layer]

The stress relaxation layers of the present invention are directed to relaxing stress caused in the cured film layers applied to the stress relaxation gas barrier film. The silicone resin composition for forming the stress relaxation layers contains the linear organopolysiloxane represented by the following formula (A-1) (hereinafter occasionally referred to as a component (A-1)): 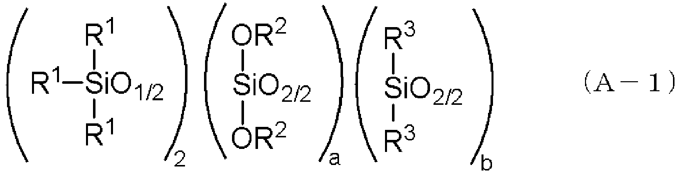 wherein R¹ are each independently an alkyl group having 1 to 3 carbon atoms or an alkenyl group having 2 to 3 carbon atoms, R² are each independently a hydrogen atom or an alkyl group having 1 to 3 carbon atoms, R³ are each independently a group selected from an alkyl group having 1 to 6 carbon atoms, an aryl group having 6 to 12 carbon atoms, and an aralkyl group having 7 to 12 carbon atoms, "a" is an integer satisfying 1 ≤ a < 200, and "b" is an integer satisfying 0 ≤ b < 200, provided that a + b satisfies 10 ≤ a + b < 200.

In the formula (A-1), R¹ are each independently an alkyl group having 1 to 3 carbon atoms or an alkenyl group having 2 to 3 carbon atoms. Specific examples include a methyl group, an ethyl group, a propyl group, a vinyl group, and an allyl group. Among these, a methyl group, an ethyl group, and a vinyl group are preferable. If the component (A-2) described below is also contained, the component (A-1) preferably has two or more alkenyl groups in one molecule. If the component (A-1) has the alkenyl groups, the alkenyl groups can react with the hydrosilyl groups as the component (A-2) to form the cured film.

In the formula (A-1), R² are each independently a hydrogen atom or an alkyl group having 1 to 3 carbon atoms, preferably a methyl group or an ethyl group.

In the formula (A-1), R³ are each independently a group selected from an alkyl group having 1 to 6 carbon atoms, an aryl group having 6 to 12 carbon atoms, and an aralkyl group having 7 to 12 carbon atoms. Examples of the alkyl group include a methyl group, an ethyl group, a propyl group, a butyl group, a pentyl group, a hexyl group, and a cyclohexyl group. Examples of the aryl group include a phenyl group, a tolyl group, a xylyl group, and a naphthyl group. Examples of the aralkyl group include a benzyl group, a 2-phenylethyl group, and a 2-phenylpropyl group. Among these, a methyl group and a phenyl group are preferable.

In the formula (A-1), "a" is an integer satisfying 1 ≤ a < 200, preferably an integer satisfying 10 ≤ a ≤ 50. "b" is an integer satisfying 0 ≤ b < 200, preferably an integer satisfying 0 ≤ b ≤ 30. However, a + b satisfies 10 ≤ a + b < 200, preferably 10 ≤ a + b ≤ 100. If a + b is less than 10, the volatilization may lead to thickness loss during the drying of the solvent. If a + b is 200 or more, the solubility in the solvent deteriorates, which is not therefore preferable.

It is preferable that the silicone resin composition for forming the stress relaxation layers further contains the organohydrogenpolysiloxane represented by the following formula (A-2) (hereinafter occasionally referred to as the component (A-2)) and the hydrosilylation catalyst as the component (B) in addition to (A-1) the linear organopolysiloxane. 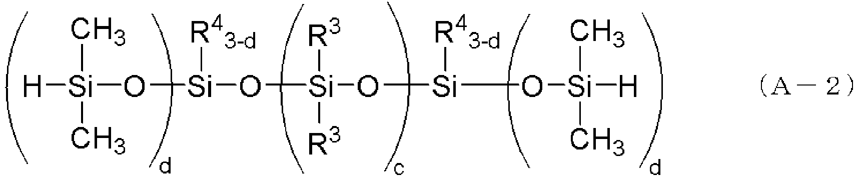 wherein R³ are the same as defined above, R⁴ are each independently an alkyl group having 1 to 4 carbon atoms or a phenyl group, "c" is an integer satisfying 0 ≤ c < 30, and "d" are each independently 2 or 3.

In the formula (A-2), R³ are the same as shown in the formula (A-1). The same as shown in formula (A-1) are exemplified as preferable aspects.

In the formula (A-2), R⁴ are each independently an alkyl group having 1 to 4 carbon atoms or a phenyl group, preferably a methyl group or a phenyl group.

In the formula (A-2), "c" is an integer satisfying 0 ≤ c < 30, preferably 0 ≤ c ≤ 10. If "c" is in this range, the solubility in the solvent or the cured product hardness is easily adjusted, which is therefore preferable.

In the formula (A-2), "d" are each independently 2 or 3.

If the component (A-2) is contained, it is preferable that the component (A-1) have two or more alkenyl groups in one molecule.

The amount of the component (A-2) blended is such that the number of moles of hydrosilyl groups in the component (A-2) is preferably 0.8 to 2.0 mols, more preferably 1.0 to 1.5 mols, per 1 mol of the total amount of alkenyl groups in the component (A-1) and the component (A-3) described below.

The hydrosilylation catalyst as the component (B) is directed to promoting the curing reaction of the silicone resin composition. Examples of the hydrosilylation catalyst include platinum group metal complexes. Specific examples include platinum (including platinum black), platinum chloride, chloroplatinic acid, a platinum-olefin complex such as a platinum-divinylsiloxane complex, and a platinum-carbonyl complex, preferably a platinum-divinylsiloxane complex.

The amount of the component (B) blended is in the range of 0.01 to 1.0% by mass, preferably in the range of 0.05 to 0.2% by mass based on the silicone resin composition. If the amount is in this range, the storage stability and the curing rate are satisfactory, which is therefore preferable.

The silicone resin composition, which contains the component (A-2), cures, so that the stress relaxation layer is less likely to be redissolved in the solvent during the applying of the cured film layer in the subsequent step, which is therefore preferable.

It is preferable that the silicone resin composition for forming the stress relaxation layers of the present invention further comprises the linear organopolysiloxane represented by the following formula (A-3) (hereinafter occasionally referred to as the component (A-3)). 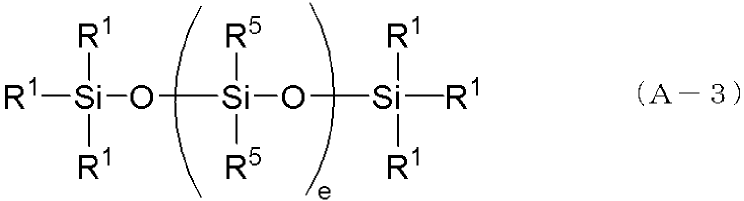 wherein R¹ are each independently as defined above, R⁵ are each independently a group selected from an alkyl group having 1 to 6 carbon atoms, an alkenyl group having 2 to 3 carbon atoms, an aryl group having 6 to 12 carbon atoms, and an aralkyl group having 7 to 12 carbon atoms provided that two or more groups in one molecule are alkenyl groups, and "e" is an integer satisfying 200 ≤ e < 500.

In the formula (A-3), R¹ are each independently the same as shown in the formula (A-1), and the same as shown in the formula (A-1) are exemplified as preferable aspects.

In the formula (A-3), R⁵ are each independently a group selected from an alkyl group having 1 to 6 carbon atoms, an alkenyl group having 2 to 3 carbon atoms, an aryl group having 6 to 12 carbon atoms, and an aralkyl group having 7 to 12 carbon atoms. Examples of the alkyl group include a methyl group, an ethyl group, a propyl group, a butyl group, a pentyl group, a hexyl group, and a cyclohexyl group. Examples of the alkenyl group include a vinyl group and an allyl group. Examples of the aryl group include a phenyl group, a tolyl group, a xylyl group, and a naphthyl group. Examples of the aralkyl group include a benzyl group, a 2-phenylethyl group, and a 2-phenylpropyl group. Among these, a methyl group, a vinyl group, and a phenyl group are preferable. Two or more groups in one molecule are however alkenyl groups.

In the formula (A-3), "e" is an integer satisfying 200 ≤ e < 500, preferably 300 ≤ e < 450. If "e" is 200 or more, the film improves in flexibility to be less likely to crack, which is therefore preferable. If "e" is less than 500, the solubility in the solvent is satisfactory, which is therefore preferable. The adjustment of the value of "e" enables regulating the physical properties as stress relaxation layers such as the wet-spreading properties on the substrate and the flexibility after the curing.

It is preferable that the silicone resin composition further contains (C) the surfactant. The same as the surfactant contained in the cured film layer can be exemplified. The amount of the surfactant blended is preferably 0.01 to 5% by mass, more preferably 0.05 to 0.2% by mass based on the total amount of the silicone resin composition.

It is preferable that the silicone resin composition further contains (D) the adhesive auxiliary. Examples of the adhesive auxiliary include vinyltrimethoxysilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, bisacrylic acid(2,2-dimethylethylene) (5-ethyl-1,3-dioxane-2,5-diyl)methylene, N-2(aminoethyl)3-aminopropylmethyldimethoxysilane, N-2(aminoethyl)3-aminopropyltrimethoxysilane, N-2(aminoethyl)3-aminopropyltriethoxysilane, 3-aminopropyltrimethoxysilane, 3-aminopropyltriethoxysilane, N-phenyl-3-aminopropyltrimethoxysilane, 3-mercaptopropyltrimethoxysilane as well as trimethoxysilane, tetramethoxysilane, and oligomers thereof. Among these, bisacrylic acid(2,2-dimethylethylene) (5-ethyl-1,3-dioxane-2,5-diyl)methylene is preferable. The amount of the adhesive auxiliary blended is preferably 0.01 to 5 parts by mass, more preferably 0.1 to 1 part by mass based on the total amount of the components (A-1) to (A-3) assumed to be 100 parts by mass.

Additives and fillers may be added to the silicone resin composition for forming the stress relaxation layers of the present invention as needed. Examples of the additives include UV absorbents, UV scattering agents, antioxidants, heavy metal deactivators, flame retardants, and antistatic agents.

Examples of the fillers include reinforcing inorganic fillers such as fumed silica, fumed titanium dioxide, and fumed alumina; and inorganic fillers such as molten silica, alumina, zirconium oxide, calcium carbonate, calcium silicate, titanium dioxide, ferric oxide, and zinc oxide. The fillers can be added at any ratio.

In order to promote the curing of the silicone resin composition, a condensation catalyst for promoting the condensation reaction of alkoxy groups or hydroxy groups may be added besides the hydrosilylation catalyst as the component (B). Although a well-known condensation catalyst may be used, any condensation catalyst should not be used that may be a catalytic poison of (B) the hydrosilylation catalyst.

The silicone resin composition is diluted with the organic solvent as needed, then applied to the substrate, and heat-dried to obtain the stress relaxation layers of the present invention. Examples of the organic solvent include saturated chain-like aliphatic hydrocarbons such as n-hexane, n-octane, and n-nonane; unsaturated aliphatic hydrocarbons such as 1-octene, 1-nonene, and 1-decene; saturated cyclic aliphatic hydrocarbons such as cyclohexane, methylcyclohexane, and dimethylcyclohexane; aromatic hydrocarbons such as toluene, xylene, and anisole; ester compounds such as n-propyl acetate, isopropyl acetate, n-butyl acetate, isobutyl acetate, isoamyl acetate, and ethyl caproate; ether compounds such as diethyl ether, dibutyl ether, and ethylene glycol diethyl ether; and silicone oils such as octamethylcyclotetrasiloxane, decamethylcyclopentasiloxane, decamethyltetrasiloxane, and dodecamethylpentasiloxane. Among these, n-hexane and dodecamethylpentasiloxane are preferably used.

The film thickness after the coating needs to be in the range of 0.1 to 15.0 µm, and is preferably 0.1 to 5 µm, more preferably 0.1 to 1.0 µm. If the film thickness is less than 0.1 µm, the effect of relaxing stress of the cured film layers is scarcely obtained. If the film thickness is more than 15.0 µm, the bendability may be deteriorated.

The same as used for forming the cured film layers can be exemplified as the substrate.

The temperature for heat-drying is determined depending on the heat resistance temperature of the substrate or the boiling point of the organic solvent. In general, the temperature is preferably in the range of 20 to 100°C. If the temperature is in this range, the types of usable substrates increase, and the boiling of the organic solvent does not lead to layer roughing.

The coating method is not limited as long as application to a target portion is possible. Examples of the coating method include roll coating using a chamber doctor coater, a one-roll kiss coater, a reverse kiss coater, a bar coater, a reverse roll coater, a forward rotation roll coater, a blade coater, and a knife coater; spin coating; dispensing; dipping; spraying; transferring; and slit coating. Application by a suitable method depending on the size and the shape of the substrate is possible. The substrate may be surface-modified as needed before the coating. Examples of the method for modifying the surface include inactive modification treatments such as argon plasma treatment, xenon excimer treatment, and UV treatment; and active modification treatments such as oxygen plasma treatment and ozone treatment.

In common cases, the organic solvent is dried by the above-mentioned method after the coating, followed by heat-curing to form the coating film. In the case of the stress relaxation layers of the present invention, the silicone resin composition is meanwhile cured in the drying step, and an additional curing step is not therefore always necessary. The resin composition to be used as the stress relaxation layers is commonly cured by heating or UV irradiation after the drying the solvent. The heat curing step requires several dozen minutes to several hours, which therefore affects the mass productivity greatly. Although the UV irradiation takes only time as short as several seconds to several minutes to cure the silicone resin composition, the UV irradiation step is separately required in addition to heat treatment for drying the solvent, which is not therefore preferable. Although the UV irradiation itself is completed in a short time, the stress relaxation layer resin needs to be left to stand for around several dozen minutes to one day in order to be fully cured. If the process progresses to the subsequent step before the curing is fully completed, the film quality of the stress relaxation layers is likely to vary widely, which should therefore be avoided. The use of the stress relaxation layers of the present invention enables performing only the solvent drying step to stabilize the film quality, progressing to the subsequent step. The mass productivity and the stability of the film quality are greatly improved as compared with those in the past.

Furthermore, the coated surface of the stress relaxation layer may be subjected to the above-mentioned surface modification treatment before the application of the polysilazane composition upon the stacking of the cured film layer on the stress relaxation layer. Especially xenon excimer treatment mineralizes the outermost surface to improve the adhesion, which is therefore preferable.

### EXAMPLE

Although the present invention will be specifically described with reference to Examples and Comparative Examples hereinafter, the present invention is not limited thereto. The "part" as used in the following Examples and Comparative Examples means part by mass.

### [Examples 1 to 9 and Comparative Examples 1 to 6]

The following formulae then represent the structures of linear organopolysiloxanes as the components (A-1) to (A-3) contained in silicone resin compositions used for Examples and Comparative Examples.

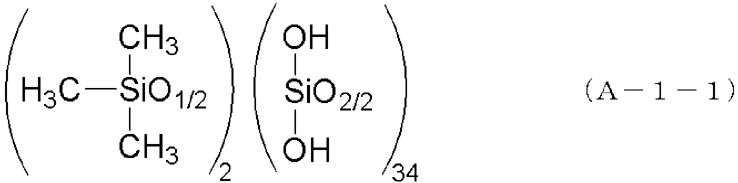

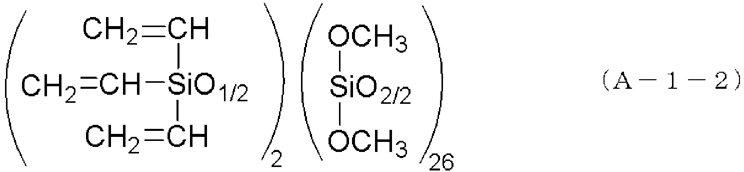

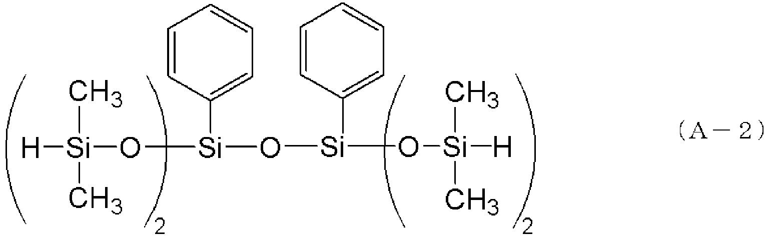

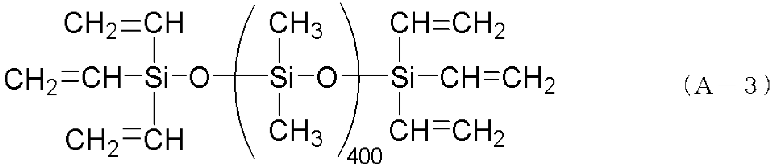

The following shows the components of the silicone resin compositions other than the components (A-1) to (A-3) and the component of a polysilazane composition for forming cured film layers.
(B) Hydrosilylation catalyst 1 ... platinum-1,3-divinyl-1,1,3,3-tetramethyldisiloxane complex
(C) Surfactant 1 ... 2-methyl-3-butyn-2-ol
   Surfactant 2 ... 2,4,7,9-tetramethyl-5-decyne-4,7-diol
(D) Adhesive auxiliary ... bisacrylic acid(2,2-dimethylethylene) (5-ethyl-1,3-dioxane-2,5-diyl)methylene Organic solvent D5 ... Decamethylcyclopentasiloxane

Polysilazane composition for forming cured film layers ... Solution in which 10 parts by mass of perhydropolysilazane wherein, in the formula (1), all R are hydrogen atoms, and n = 170 is dissolved in 90 parts by mass of dibutyl ether.

The silicone resin compositions of Examples 1 to 9 and Comparative Examples 1 to 4 were prepared with the above-mentioned components and the organic solvent in the blended amounts shown in Table 1. Stress relaxation layers and cured film layers were then formed under the following conditions, followed by the evaluations of the coatability and the water vapor permeability. Table 1 shows the results of the evaluations and the film thicknesses. In Comparative Example 5, the component (A) was not dissolved in toluene, so that the silicone resin composition was not able to be prepared. The subsequent evaluation was not therefore performed. In Comparative Example 6, a sample in which only three cured film layers were stacked was used to be evaluated.

### Table 1 describes the results.

### [Evaluation of coatability]

In the present invention, the coatability was evaluated under the following conditions based on whether a uniform film can be formed in a short time in a coating step, a drying step, and a curing step.
1. Polyimide (PI) films having a thickness of 75 µm are surface-modified by Ar plasma. The Ar plasma treatment conditions are as follows:
   Ar flow rate: 10 cc/min
   Output power: 100 W
   Treatment time: 30 seconds
2. The above-mentioned PI films are coated with the silicone resin compositions of Examples and Comparative Examples using a spin coater. The conditions for the spin coater are as follows:
   Rotational speed: 2,500 rpm
   Slope: for 5 seconds before the rotation and for 5 seconds after the rotation
   Rotational time: 30 seconds
3. The compositions are dried and cured on a hot plate to obtain stress relaxation layers. The drying and curing conditions are as follows:
   Temperature: 100°C
   Time: 4 minutes
4. The PI films coated with the formed films are observed with a white interferometer (available from KEYENCE CORPORATION, VK-X3000) to confirm the surface roughness and the presence or absence of defects such as pinholes.

### [Evaluation of water vapor transmission rate]

In the present invention, stress relaxation layers and cured film layers as the inorganic polysilazane cured films are expectedly stacked alternately. Each PI film on which three stress relaxation layers and three cured film layers, namely a total of six layers, were stacked were measured for the water vapor transmission rate. The sample to be evaluated was manufactured by the following method.
1. A polyimide (PI) film having a thickness of 75 µm is surface-modified by Ar plasma. The method of surface modification is the same as in the evaluation of the coatability.
2. The above-mentioned PI film was coated with a silicone resin composition of Example or Comparative Example using a spin coater. The conditions for the spin coater are the same as in the evaluation of the coatability.
3. The silicone resin composition is dried and cured on the hot plate to obtain a stress relaxation layer. The drying and curing conditions are the same as in the evaluation of the coatability.
4. The silicone resin composition is irradiated with xenon excimer light at 4,000 mJ/cm² in a nitrogen atmosphere.
5. The inorganic polysilazane solution (polysilazane composition) is applied with a spin coater. The coating conditions are the same as in the evaluation of the coatability.
6. The solution is dried on the hot plate to obtain a cured film layer. The drying conditions are the same as in the evaluation of the coatability.
7. Irradiation with xenon excimer light at 4,000 mJ/cm² is performed in a nitrogen atmosphere.
8. The steps 2 to 7 are repeated twice more to stack a total of six layers.
9. The water vapor transmission rate is measured. The measurement conditions are as follows:
   Temperature: 85°C
   Humidity: 70% RH

**[Table 1]**

| | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| (A) | A-1-1 | 10 | 10 | 50 | 10 | | 0.8 | 4 | | | 100 | | | | 10 | |
| | A-1-2 | | | | | 8 | | | 4 | 4 | | | 0.4 | 60 | | |
| | A-2 | | | | | | | 4 | 4 | 4 | | 8 | | | | |
| | A-3 | | | | | 2 | 0.2 | 2 | 2 | 2 | | 2 | 0.1 | 15 | | |
| (B) | Hydrosilylation catalyst 1 | | | | | | 0.001 | 0.0001 | 0.001 | 0.001 | | 0.001 | 0.0001 | 0.002 | | |
| (C) | Surfactant 1 | | | | 1 | | | | | | | | | | | |
| | Surfactant 2 | | | | | | | | 1 | | | | | | | |
| (D) | Adhesive auxiliary | | | | | | | | | 0.1 | | | | | | |
| Organic solvent | D5 | 90 | | | | 90 | 99 | 90 | 90 | 90 | | 90 | 99.5 | 25 | | |
| | Heptane | | 90 | 50 | 90 | | | | | | | | | | | |
| | Toluene | | | | | | | | | | | | | | 90 | |
| Coatability | | Uniform | Uniform | Uniform | Uniform | Uniform | Uniform | Uniform | Uniform | Uniform | Nonuniform | Uniform | Uniform | Nonuniform | - | - |
| Film thickness of one cured film layer [µm] | | 0.3 | 0.3 | 0.3 | 0.3 | 0.4 | 0.3 | 0.4 | 0.3 | 0.3 | 0.3 | 0.4 | 0.4 | 0.3 | - | 0.4 |
| Film thickness of one stress relaxation layer [µm] | | 0.5 | 0.5 | 2 | 0.5 | 0.5 | 0.1 | 0.4 | 0.4 | 0.4 | 20 | 0.5 | 0.03 | 17 | - | - |
| Water vapor transmission rate | | 0.15 | 0.14 | 0.2 | 0.08 | 0.23 | 0.48 | 0.25 | 0.17 | 0.09 | 3.62 | 24.21 | 22.85 | 5.87 | - | >40 |
| [g/m²/day] | | | | | | | | | | | | | | | | |

The results of Table 1 have shown that all Examples 1 to 9, wherein the gas barrier films of the present invention in which the cured film layers and the stress relaxation layers are stacked are formed on the substrates, achieve satisfactory results in both the evaluations of the coatability and the water vapor transmission rate.

Meanwhile, Comparative Examples 1, 3, and 4 have yielded results inferior in the water vapor transmission rate compared to those of Examples. Especially Comparative Examples 1 and 4 have yielded poor results in terms of coatability. It is conceivable that this is because the film thicknesses of the stress relaxation layers exceed 15 µm, resulting in deterioration in bendability.

Although Comparative Example 2, not containing the linear organopolysiloxane that is a component of the silicone resin composition, is satisfactory in terms of coatability, Comparative Example 2 has yielded poor results in terms of the water vapor transmission rate.

Comparative Example 6, in which only the cured film layers are stacked, has yielded poor results in terms of the water vapor transmission rate.

The above has shown that the stress relaxation gas barrier film of the present invention is useful as a gas barrier film for electronic materials because uniform application to a film or polysilazane resin is possible and workability does not deteriorate.

The present description includes the following embodiments.
[1] A stress relaxation gas barrier film, comprising one or more cured film layers and one or more stress relaxation layers alternately stacked,
   the one or more cured film layers being a cured product of a polysilazane composition comprising a polysilazane compound represented by the following formula (1): 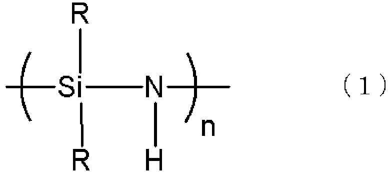
   wherein R are each independently a hydrogen atom or a group selected from an alkyl group having 1 to 6 carbon atoms, an aryl group having 6 to 12 carbon atoms, an aralkyl group having 7 to 12 carbon atoms, and an alkoxy group having 1 to 6 carbon atoms, and "n" is an integer of 2 to 20,000,
   the one or more stress relaxation layers being a cured product of a silicone resin composition comprising a linear organopolysiloxane represented by the following formula (A-1), and each having a film thickness of 0.1 to 15.0 µm: 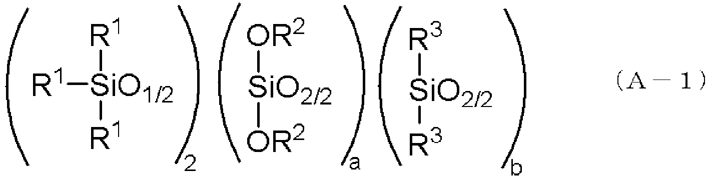
   wherein R¹ are each independently an alkyl group having 1 to 3 carbon atoms or an alkenyl group having 2 to 3 carbon atoms, R² are each independently a hydrogen atom or an alkyl group having 1 to 3 carbon atoms, R³ are each independently a group selected from an alkyl group having 1 to 6 carbon atoms, an aryl group having 6 to 12 carbon atoms, and an aralkyl group having 7 to 12 carbon atoms, "a" is an integer satisfying 1 ≤ a < 200, and "b" is an integer satisfying 0 ≤ b < 200, provided that a + b satisfies 10 ≤ a + b < 200.
[2]: The stress relaxation gas barrier film according to [1], wherein the silicone resin composition further comprises an organohydrogenpolysiloxane represented by the following formula (A-2): 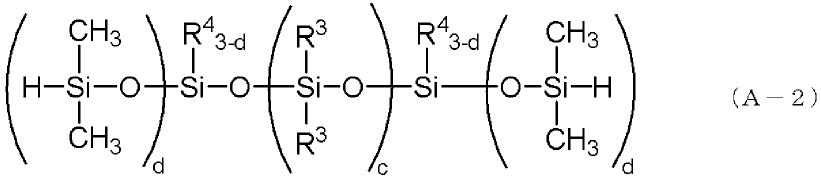 wherein R³ are as defined above, R⁴ are each independently an alkyl group having 1 to 4 carbon atoms or a phenyl group, "c" is an integer satisfying 0 ≤ c < 30, and "d" are each independently 2 or 3, and (B) a hydrosilylation catalyst.
[3]: The stress relaxation gas barrier film according to [1] or [2], wherein the silicone resin composition further comprises a linear organopolysiloxane represented by the following formula (A-3) : 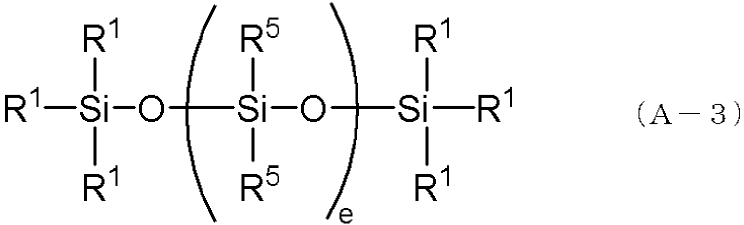 wherein R¹ are each independently as defined above, R⁵ are each independently a group selected from an alkyl group having 1 to 6 carbon atoms, an alkenyl group having 2 to 3 carbon atoms, an aryl group having 6 to 12 carbon atoms, and an aralkyl group having 7 to 12 carbon atoms, provided that two or more groups in one molecule are alkenyl groups, and "e" is an integer satisfying 200 ≤ e < 500.
[4]: The stress relaxation gas barrier film according to any one of [1] to [3], wherein in the formula (1), all R are hydrogen atoms.
[5]: The stress relaxation gas barrier film according to any one of [1] to [4], wherein the polysilazane composition further comprises a surfactant.
[6]: The stress relaxation gas barrier film according to any one of [1] to [5], wherein the silicone resin composition further comprises (C) a surfactant.
[7]: The stress relaxation gas barrier film according to any one of [1] to [6], wherein the silicone resin composition further comprises (D) an adhesive auxiliary.

The present invention is not limited to the above-mentioned embodiments. The above-mentioned embodiments are illustrative. Any embodiment having a configuration that is substantially identical to the technical idea described in Claims and exhibiting the same function and effect as the technical idea described in Claims is included in the technical scope of the present invention.

## Claims

1. A stress relaxation gas barrier film, comprising one or more cured film layers and one or more stress relaxation layers alternately stacked,
the one or more cured film layers being a cured product of a polysilazane composition comprising a polysilazane compound represented by the following formula (1): 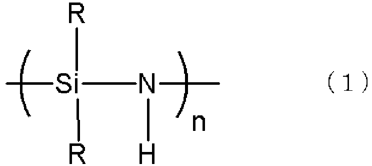
wherein R are each independently a hydrogen atom or a group selected from an alkyl group having 1 to 6 carbon atoms, an aryl group having 6 to 12 carbon atoms, an aralkyl group having 7 to 12 carbon atoms, and an alkoxy group having 1 to 6 carbon atoms, and "n" is an integer of 2 to 20,000,
the one or more stress relaxation layers being a cured product of a silicone resin composition comprising a linear organopolysiloxane represented by the following formula (A-1), and each having a film thickness of 0.1 to 15.0 µm: 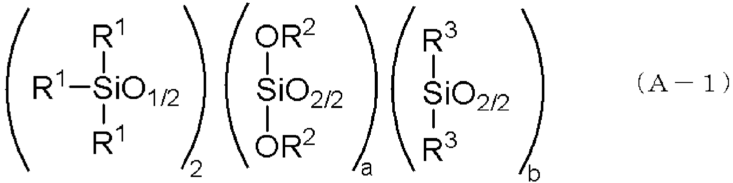
wherein R¹ are each independently an alkyl group having 1 to 3 carbon atoms or an alkenyl group having 2 to 3 carbon atoms, R² are each independently a hydrogen atom or an alkyl group having 1 to 3 carbon atoms, R³ are each independently a group selected from an alkyl group having 1 to 6 carbon atoms, an aryl group having 6 to 12 carbon atoms, and an aralkyl group having 7 to 12 carbon atoms, "a" is an integer satisfying 1 ≤ a < 200, and "b" is an integer satisfying 0 ≤ b < 200, provided that a + b satisfies 10 ≤ a + b < 200.

2. The stress relaxation gas barrier film according to claim 1, wherein the silicone resin composition further comprises an organohydrogenpolysiloxane represented by the following formula (A-2): 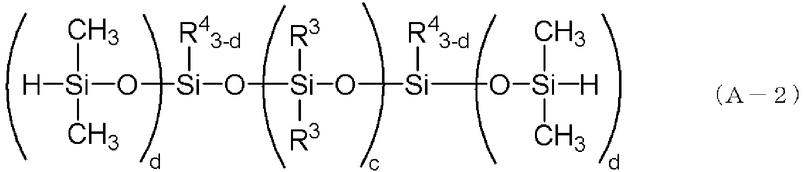 wherein R³ are the same as defined above, R⁴ are each independently an alkyl group having 1 to 4 carbon atoms or a phenyl group, "c" is an integer satisfying 0 ≤ c < 30, and "d" are each independently 2 or 3, and (B) a hydrosilylation catalyst.

3. The stress relaxation gas barrier film according to claim 1 or 2, wherein the silicone resin composition further comprises a linear organopolysiloxane represented by the following formula (A-3): 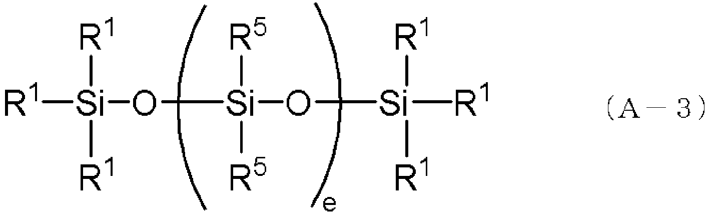 wherein R¹ are each independently as defined above, R⁵ are each independently a group selected from an alkyl group having 1 to 6 carbon atoms, an alkenyl group having 2 to 3 carbon atoms, an aryl group having 6 to 12 carbon atoms, and an aralkyl group having 7 to 12 carbon atoms, provided that two or more groups in one molecule are alkenyl groups, and "e" is an integer satisfying 200 ≤ e < 500.

4. The stress relaxation gas barrier film according to any of claims 1 to 3, wherein in the formula (1), all R are hydrogen atoms.

5. The stress relaxation gas barrier film according to any of claims 1 to 4, wherein the polysilazane composition further comprises a surfactant.

6. The stress relaxation gas barrier film according to any of claims 1 to 5, wherein the silicone resin composition further comprises (C) a surfactant.

7. The stress relaxation gas barrier film according to any of claims 1 to 6, wherein the silicone resin composition further comprises (D) an adhesive auxiliary.
